# EUROPÄISCHE PATENTSCHRIFT

(11) **EP 2 262 989 B1**
(45) Veröffentlichungstag und Bekanntmachung des Hinweises auf die Patenterteilung: **08.02.2012**
(21) Anmeldenummer: 09732115.2
(22) Anmeldetag: 09.04.2009
(51) Int. Cl.: F01P 7/04, F01P 7/08, F01P 5/04

(54) **REIBSCHALTKUPPLUNG SOWIE ANTRIEBSSYSTEM FÜR DIE KÜHLUNG EINES VERBRENNUNGSMOTORS EINES FAHRZEUGS MIT EINER REIBSCHALTKUPPLUNG**
FRICTION CLUTCH AND DRIVE SYSTEM FOR COOLING AN INTERNAL COMBUSTION ENGINE OF A VEHICLE WITH A FRICTION CLUTCH
EMBRAYAGE À FRICTION ET SYSTÈME D ENTRAÎNEMENT POUR LE REFROIDISSEMENT D UN MOTEUR À COMBUSTION D UN VÉHICULE ÉQUIPÉ D UN EMBRAYAGE À FRICTION

(30) Priorität: 18.04.2008 DE 202008005470 U
(43) Veröffentlichungstag der Anmeldung: 22.12.2010
(73) Patentinhaber: Kendrion Linnig GmbH, 88677 Markdorf (DE)
(72) Erfinder: GEBHART, Manfred, 78462 Konstanz (DE)
(74) Vertreter: Dobler, Markus
(86) Internationale Anmeldenummer: PCT/EP2009/002650
(87) Internationale Veröffentlichungsnummer: WO 2009/127363

(56) Entgegenhaltungen:
- EP-A1- 0 634 568
- EP-A2- 1 130 233
- EP-A2- 1 577 142
- DE-A1- 10 303 183
- DE-U1-202007 001 923

## Beschreibung

Die Erfindung betrifft eine Reibschaltkupplung nach dem Oberbegriff des Anspruchs 1 sowie ein Antriebssystem mit einer solchen Reibschaltkupplung.

### Stand der Technik

Reibschaltkupplungen der einleitend bezeichneten Art sind bereits in vielfältiger Ausgestaltung bekannt geworden.

Aus der deutschen Offenlegungsschrift 4 207 710 A1 ist eine elektromagnetische betätigbare Reibschaltkupplung bekannt, welche zum Antrieb eines Lüfterrades für einen Ventilator dient. Das Lüfterrad soll dabei mit unmittelbarer Drehzahl der Antriebseinheit und mit zwei unterschiedlichen Schleppdrehzahlen antreibbar sein. Zur Herstellung der unmittelbaren Drehzahl ist eine erste elektromagnetische Reibscheibenkupplung und zur Herstellung einer ersten Schleppdrehzahl eine zweite elektromagnetische Reibscheibenkupplung in Verbindung mit einer ersten Wirbelstromkupplung vorgesehen. Eine weitere Wirbelstromkupplung dient zur Erzeugung einer zweiten Schleppdrehzahl.

### Aufgabe und Vorteile der Erfindung

Der Erfindung liegt die Aufgabe zugrunde, eine Reibschaltkupplung mit kompaktem variabel einsetzbarem Aufbau bereitzustellen.

Diese Aufgabe wird durch die Merkmale des Anspruchs 1, 4, 7 und 8 gelöst.

In den abhängigen Ansprüchen sind vorteilhafte und zweckmäßige Weiterbildungen der Erfindung angegeben.

Die Erfindung geht zunächst von einer Reibschaltkupplung mit einer Antriebs- und einer Abtriebsseite aus, die zum Antrieb eines Lüfterrades einsetzbar ist. Die Reibschaltkupplung umfasst eine schaltbare Reibscheibenkupplung, die die Abtriebsseite mit der Antriebsseite im geschalteten Zustand verbindet. Des Weiteren ist eine erste Wirbelstromkupplung zur Bereitstellung einer Schleppdrehzahl auf der Abtriebsseite vorgesehen, wobei die erste Wirbelstromkupplung eine an einem Kühlring ausgebildete Wirbelstromzone besitzt. Die Schleppdrehzahl stellt sich dann ein, wenn die Reibscheibenkupplung nicht zugeschaltet ist.

Der Kern der Erfindung liegt darin, dass am selben Kühlring, an welchem für die erste Wirbelstromkupplung eine Wirbelstromzone ausgebildet ist, für eine zweite Wirbelstromkupplung eine Wirbelstromzone vorgesehen ist.

Damit lässt sich von den Wirbelstromkupplungen entstehende Wärme effektiv über ein Bauteil abführen. Der Kühlring ist z.B. ein Ring aus Aluminium mit gegebenenfalls Kühlrippen, in welchem hinter der jeweiligen Wirbelstromzone z.B. eine Stahleinlage angeordnet ist, die eine gewünschte Feldführung der in den Wirbelstromzonen erzeugten Wirbelströme herbeiführt.

Der jeweiligen Wirbelstromzone steht vorzugsweise ein mit Dauermagneten versehenes drehbares Element, z.B. ein mit Dauermagneten besetzter Trägerring gegenüber, der in den Wirbelstromzonen entsprechende Wirbelströme induziert.

Die Reibschaltkupplung ist vorzugsweise so ausgelegt, dass am Kühlring zwar für zwei Wirbelstromkupplungen Wirbelstromzonen vorhanden sind, jedoch eine volle Funktionsfähigkeit auch mit nur lediglich einer wirksame Wirbelstromkupplung gegeben ist. In diesem Fall können zwei Drehzahlen bereitgestellt werden.

Für den Fall, dass die zweite Wirbelstromkupplung mit einem entsprechenden Dauermagnetträger voll ausgebildet ist, ist diese vorzugsweise schaltbar über z.B. eine Reibschaltkupplung, so dass insgesamt drei Drehzahlen möglich sind. Bei einer ersten Schleppdrehzahl ist die Reibschaltkupplung und die zweite schaltbare Wirbelstromkupplung abgeschaltet, so dass eine Verbindung von Antriebsseite zur Abtriebsseite lediglich durch die erste Wirbelstromkupplung gegeben ist. Eine weitere Schleppdrehzahl, die höher liegt als die erste Schleppdrehzahl, lässt sich dadurch realisieren, dass zusätzlich die zweite Wirbelstromkupplung zugeschaltet wird.

Schließlich wird durch Zuschalten der Reibscheibenkupplung die Antriebsseite mit der Abtriebsseite reibschlüssig verbunden. So ergibt sich eine dritte Drehzahl, die bei vollständigem Reibschluss der Antriebsdrehzahl entspricht.

Das Schalten der Reibscheibenkupplung und/oder der zweiten Wirbelstromkupplung kann pneumatisch oder hydraulisch realisiert sein.

In einer besonders bevorzugten Ausgestaltung der Erfindung wird die Reibscheibenkupplung und/oder die zweite Wirbelstromkupplung elektromagnetisch zu- und abgeschaltet. Hierzu kann eine Ankerscheibe, welche z.B. axial beweglich gelagert ist, über ein elektrisch erzeugtes Magnetfeld, z.B. einer Spule gegen einen Rotor gezogen werden, so dass sich zwischen der Ankerscheibe und dem Rotor ein Reibschluss ausbildet.

Der Rotor stellt vorzugsweise die Abtriebsseite der Reibschaltkupplung dar.

In diesem Fall ist es bevorzugt, wenn der Kühlring die Antriebsseite der Kupplung bildet. Dies hat neben der Möglichkeit einer sehr kompakten Bauweise den weiteren Vorteil, dass eine Kühlung der Wirbelstromkupplungen bestmöglichst gegeben ist, da die Antriebsseite immer mit Antriebsdrehzahl rotiert.

Hingegen ergibt sich die Drehzahl der Abtriebsseite abhängig vom Schaltzustand der Kupplung.

Am Kühlring sind die Wirbelstrombereiche vorzugsweise in radialer Richtung betrachtet übereinanderliegend, z.B. radial deckungsgleich übereinanderliegend angeordnet. Damit lässt sich eine kompakte Bauweise weiter verbessern.

Sowohl die zweite Wirbelstromkupplung als auch die Reibscheibenkupplung verfügt über eine separat bewegbare Ankerscheibe.

Im Weiteren ist es denkbar, dass im Kühlring zwei getrennte Magnetfeldleitmittel vorhanden sind. Zum Beispiel ist hinter radial von innen nach außen betrachtet, übereinanderliegenden Wirbelstromzonen jeweils ein magnetisch leitender Stahlring in den Kühlring eingegossen. Dies trägt zu einer Optimierung des Magnetfeldes bei, das von den Wirbelströmen indiziert wird.

Eine beschriebene Reibschaltkupplung kann in einem Antriebssystem für die Kühlung eines Verbrennungsmotors in einem Fahrzeug, z.B. einem Kraftfahrzeug, eingesetzt werden, bei welchem ein Lüfterrad und eine Antriebsseite des Lüfterrades durch die Kupplung verbunden wird.

Zwischen dem Lüfterrad, das z.B. auf einem Kühler eines Verbrennungsmotors einwirkt, und der Kupplung kann überdies ein Winkelgetriebe vorgesehen werden. Dadurch kann den räumlichen Anordnungen von Aggregaten im Motorraum z.B. eines Kraftfahrzeugs Rechnung getragen werden.

Im Weiteren ist es wesentlich für die Erfindung, wenn bei einem Antriebssystem für die Kühlung eines Verbrennungsmotors eines Fahrzeugs, bei welchem zwischen einem Lüfterrad und einer Antriebsseite des Lüfterrades ein Getriebe, insbesondere Winkelgetriebe und eine Kupplung, z.B. eine oben beschriebene Kupplung, vorgesehen ist, dass die Kupplung unmittelbar am Winkelgetriebe antriebsseitig anstößt, insbesondere daran direkt befestigt, z.B. angeflanscht ist. Vorzugsweise ist die Verbindung derart, dass keine offenliegenden Wellenabschnitte vorhanden sind. Hierdurch lässt sich eine robuste, kompakte Einheit realisieren, die im rauen Betriebseinsatz gegen allfällige Einwirkungen von außen eine hohe Beständigkeit und Stabilität besitzt.

### Zeichnungen

Mehrere Ausführungsbeispiele der Erfindung sind in Zeichnungen dargestellt und werden nachstehend unter Angabe weiterer Vorteile und Einzelheiten näher erläutert.

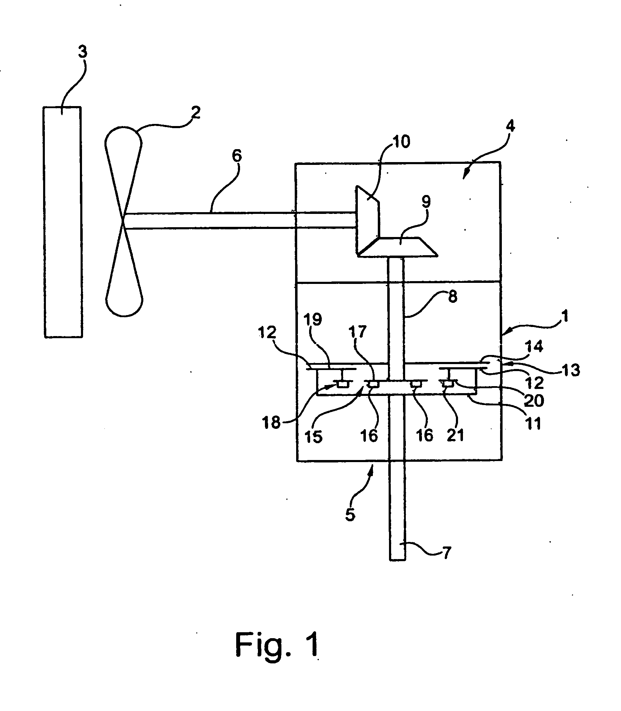

Es zeigen
- Figuren 1 - 4: in jeweils stark schematisierten Seitenansichten eine erfindungsgemäße Reibschaltkupplung mit Winkelgetriebe zum Antrieb eines Lüfterrades vor einer Kühlereinheit.

### Beschreibung der Ausführungsbeispiele

In Figur 1 ist ein Antriebssystem 1 für ein Lüfterrad 2 dargestellt, das z.B. vor einem Kühler 3 eines Verbrennungsmotors (nicht dargestellt) eines KFZs, z.B. eines Omnibusses, positioniert ist. Das Antriebssystem 1 umfasst ein Winkelgetriebe 4 sowie eine elektromagnetisch betätigbare Reibschaltkupplung 5. Die Reibschaltkupplung 5 ist unmittelbar am Winkelgetriebe 4 angeordnet, z.B. direkt am Winkelgetriebe 4 montiert. Das Winkelgetriebe 4 umfasst eine Ausgangswelle 6, die mit dem Lüfterrad 2 verbunden ist.

Die Reibschaltkupplung 5 umfasst antriebsseitig eine Antriebswelle 7 und abtriebsseitig eine Abtriebswelle 8, welche in das Winkelgetriebe 4 geführt ist.

Im Winkelgetriebe sind zwei im Winkel zueinander stehende Zahnräder 9, 10 vorgesehen.

Die Reibschaltkupplung umfasst einen Kühlring 11, der mit der Antriebswelle 7 drehfest verbunden ist. Am Kühlring 11 drehfest angeordnet ist außerdem eine axial bewegbare Ankerscheibe 12 einer Reibscheibenkupplung 13. Der Ankerscheibe 12 gegenüberliegend ist ein Rotor 14 der Reibscheibenkupplung, welcher drehfest mit der Abtriebswelle 8 verbunden ist. Die Ankerscheibe 12 kann durch einen nicht dargestellten Elektromagneten an den Rotor 14 herangezogen werden, womit eine direkte Verbindung der Antriebswelle 7 mit der Abtriebswelle 8 durch Reibschluss ermöglicht ist.

Zwischen der Antriebswelle 7 und der Abtriebswelle 8 ist darüber hinaus eine erste Wirbelstromkupplung 15 angeordnet, wobei ein mit Dauermagneten 16 besetzter Träger 17 mit der Abtriebswelle 8 drehfest verbunden ist. Die Dauermagnete wirken mit einer gegenüberliegenden Wirbelstromzone am Kühlring 11 zusammen, so dass ein Mitnahmemoment entstehen kann.

Hierzu ist ein Drehzahlunterschied zwischen Antriebswelle 7 und Abtriebswelle 8 erforderlich.

Schließlich ist in der Reibschaltkupplung 5 eine zweite Wirbelstromkupplung 18 vorgesehen, die jedoch im Gegensatz zur ersten Wirbelstromkupplung 15 schaltbar ist.

Dazu verfügt die zweite Wirbelstromkupplung 18 über eine Ankerscheibe 19, die axial bewegbar ist und bei entsprechenden Magnetkräften an den Rotor 14 herangezogen werden kann.

Ist die Reibscheibenkupplung 13 und die zweite Wirbelstromkupplung abgeschaltet, treibt die Antriebswelle 7 über die erste Wirbelstromkupplung 15 auf einer Schleppdrehzahl die Abtriebswelle 8 an.

Wird zusätzlich durch Anziehen der Ankerscheibe 19 die zweite Wirbelstromkupplung 18 aktiviert, kann durch die auf einem Träger 20 aufgebrachten Dauermagnete 21 eine Wechselwirkung mit einer zweiten am Kühlring 11 ausgebildeten Wirbelstromzone bei einer Drehzahldifferenz von Antriebswelle 7 zur Abtriebswelle 8 stattfinden, was dazu führt, dass die Abtriebswelle 8 mit einer etwas größeren Drehzahl als der Schleppdrehzahl angetrieben wird. Die zweite Wirbelstromkupplung 18 übernimmt sozusagen ein zusätzliches Antriebsmoment, was eine zweite Schleppdrehzahl ermöglicht.

Wichtig dabei ist, dass beide Wirbelstromzonen am Kühlring 11 vorgesehen sind, der immer auf der Drehzahl der Antriebswelle 7 mitläuft.

Damit ist eine optimale Kühlung gewährleistet, die bei höherer Drehzahl besser ist als bei niedriger Drehzahl.

Insgesamt sind somit die folgenden Drehzahlstufen realisierbar: Schleppdrehzahl, erhöhte Schleppdrehzahl und direkte Verbindung von Antriebswelle mit Abtriebswelle 8 bei geschalteter Reibscheibenkupplung 13.

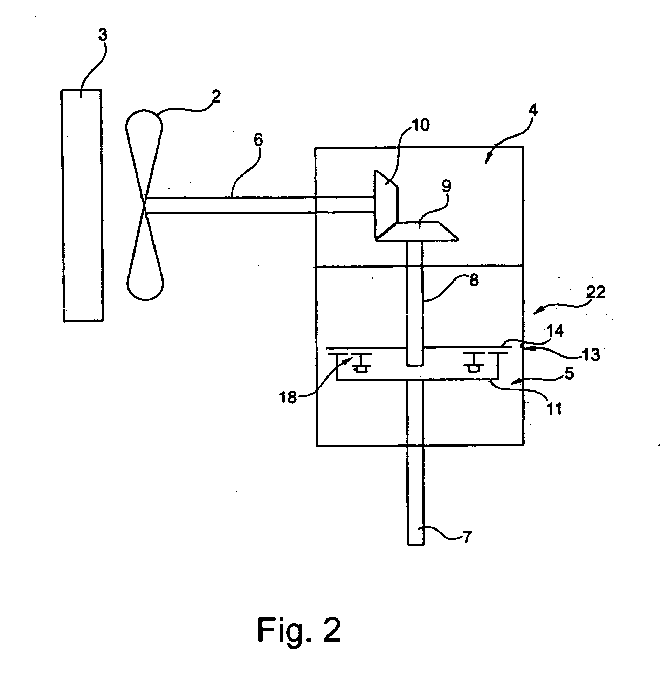

Die Ausführungsform eines Antriebssystems 22 gemäß Figur 2 unterscheidet sich von der Ausführungsform gemäß Figur 1 dadurch, dass die Reibschaltkupplung lediglich eine schaltbare Wirbelstromkupplung 18 umfasst. Genauso ist eine Reibscheibenkupplung 13 vorgesehen.

Damit lassen sich jedoch auch drei Drehzahlen realisieren. Bei einer ersten Drehzahl ist die Reibscheibenkupplung 13 als auch die Wirbelstromkupplung 18 ausgestaltet. Eine Übertragung einer Drehzahl der Antriebswelle 7 auf die Abtriebswelle 8 findet aber mit einer gewissen kleinen Schleppdrehzahl durch die Lagerreibung statt, da sich drehende Teile der Antriebsseite auf der Abtriebswelle 8 gelagert sind und durch die Lagerreibung somit ein Mitnahmeeffekt der Abtriebswelle 8 stattfinden kann.

Eine zweite Schleppdrehzahl ergibt sich dann, wenn die schaltbare Wirbelstromkupplung 18 zugeschaltet ist.

Die dritte Drehzahl ist die direkte Verbindung von Antriebswelle 7 mit Abtriebswelle 8 über die geschaltete Reibscheibenkupplung 13.

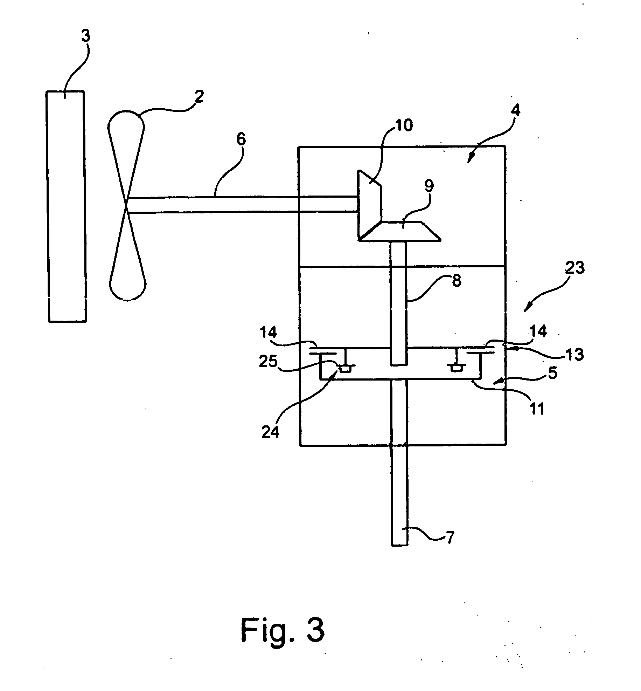

Bei einer weiteren Ausführungsform eines Antriebssystems 23 gemäß Figur 3 liegt der Unterschied zur Ausführungsform gemäß Figur 1 darin, dass die Reibschaltkupplung 5 zweistufig ist.

Sie umfasst wie in Figur 1 eine schaltbare Reibscheibenkupplung 13 mit entsprechender Funktionalität.

Wenn die Reibscheibenkupplung 13 nicht geschaltet ist, ist permanent eine Wirbelstromkupplung 24 zugeschaltet, deren Dauermagnetträger 25 drehfest mit dem Rotor 14 in Verbindung steht. Antriebsseitig ergibt sich bei einer Drehzahldifferenz von Antriebswelle 7 zur Abtriebswelle 8 eine Wechselwirkung mit dem Kühlring 11.

Bei allen drei Ausführungsformen 1, 22, 23 eines Antriebssystems ist der Kühlring 11 immer antriebsseitig angeordnet. Außerdem sind die Wirbelstromzonen grundsätzlich in diesen einen Kühlring 11 ausgebildet.

Des weiteren ist vorzugsweise das Design der Ausführungsform gemäß Figur 3 so ausgebildet, dass durch zusätzliche Bauteile eine schaltbare, zweite Wirbelstromkupplung 18 einbaubar wäre.

Damit lassen sich mit überwiegend gleichen Bauteilen sozusagen im Baukastenprinzip unterschiedliche Kupplungsmodifikationen realisieren.

Ein weiterer wichtiger Aspekt der Kupplungen gemäß der Figuren 1 bis 3 liegt darin, dass die Reibschaltkupplung 5 unmittelbar mit dem Winkelgetriebe 4 verbunden ist, wobei die Reibschaltkupplung 5 antriebsseitig an das Winkelgetriebe angeordnet ist. Es ist somit kein frei liegender Wellenabschnitt der Antriebswelle 8 vorhanden. Vorzugsweise ist die Kupplung 5 direkt an das Winkelgetriebe 4 angeflanscht. Das hat den Vorteil einer nicht nur kompakten, sondern auch besonders stabilen Bauweise.

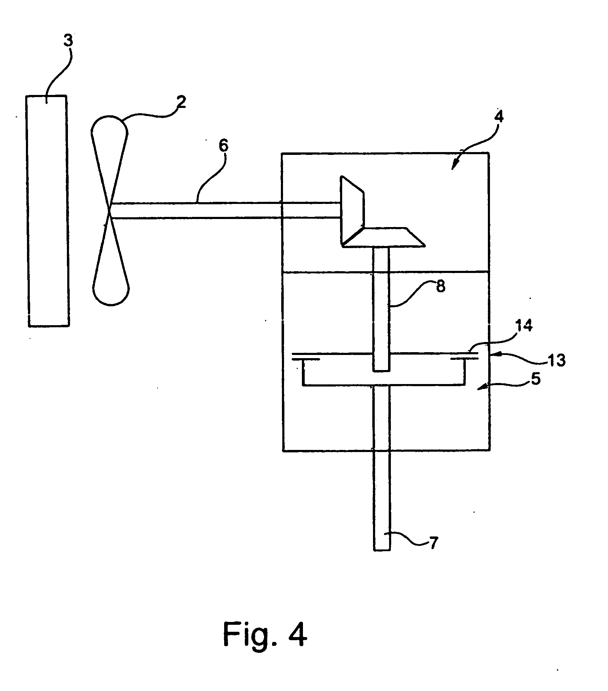

Die Anordnung von Winkelgetriebe 4 und Reibschaltkupplung 5 ist auch in Figur 4 entsprechend realisiert.

Diese Ausführungsform unterscheidet sich von der Ausführungsform nach Figur 1 dadurch, dass die Reibschaltkupplung 5 nur noch aus der Reibscheibenkupplung 13 besteht, so dass eine Drehzahl der Antriebswelle 7 entweder auf die Abtriebswelle 8 zugeschaltet oder abgeschaltet werden kann. Es gibt also nur eine Drehzahlstufe.

### Bezugszeichenliste:

- 1: Antriebssystem
- 2: Lüfterrad
- 3: Kühler
- 4: Winkelgetriebe
- 5: Reibschaltkupplung
- 6: Ausgangswelle
- 7: Antriebswelle
- 8: Abtriebswelle
- 9: Zahnrad
- 10: Zahnrad
- 11: Kühlring
- 12: Ankerscheibe
- 13: Reibscheibenkupplung
- 14: Rotor
- 15: 1. Wirbelstromkupplung
- 16: Dauermagnete
- 17: Träger
- 18: 2. Wirbelstromkupplung
- 19: Ankerscheibe
- 20: Träger
- 21: Dauermagnet
- 22: Antriebssystem
- 23: Antriebssystem
- 24: Wirbelstromkupplung

## Patentansprüche

1. Reibschaltkupplung (5) mit einer Antriebs- und einer Abtriebsseite, die zum Antrieb eines Lüfterrades (2) einsetzbar ist, und eine schaltbare Reibscheibenkupplung (13), welche die Abtriebsseite mit der Antriebsseite im geschalteten Zustand verbindet sowie eine erste Wirbelstromkupplung (15) zur Bereitstellung einer Schleppdrehzahl auf der Abtriebsseite umfasst, wobei die erste Wirbelstromkupplung (15) eine an einem Kühlring (11) ausgebildete Wirbelstromzone besitzt, **dadurch gekennzeichnet, dass** am selben Kühlring (11), an welchem für die erste Wirbelstromkupplung (15) eine Wirbelstromzone ausgebildet ist, für eine zweite Wirbelstromkupplung (18) eine Wirbelstromzone vorgesehen ist.

2. Kupplung nach Anspruch 1, **dadurch gekennzeichnet, dass** eine zweite Wirbelstromkupplung (18) vorgesehen ist, die sich schalten lässt.

3. Kupplung nach einem der vorhergehenden Ansprüche, **dadurch gekennzeichnet, dass** die Reibscheibenkupplung (13) und/oder die zweite Wirbelstromkupplung (18) elektromagnetisch zu- und abschaltbar sind.

4. Kupplung nach dem Oberbegriff des Anspruchs 1, insbesondere nach Anspruch 1, **dadurch gekennzeichnet, dass** der Kühlring (11) die Antriebsseite der Kupplung bildet.

5. Kupplung nach einem der vorhergehenden Ansprüche, **dadurch gekennzeichnet, dass** ein Rotor (14) der Reibschaltkupplung (5), der mit einer Ankerscheibe (12) zusammenwirkt, die Abtriebsseite bildet.

6. Kupplung nach einem der vorhergehenden Ansprüche, **dadurch gekennzeichnet, dass** im Kühlring (11) zwei getrennte Magnetfeld-Leitmittel vorgesehen sind.

7. Antriebssystem (1, 22, 23) für die Kühlung eines Verbrennungsmotors eines Fahrzeugs, bei welchem zwischen einem Lüfterrad (3) und einer Antriebsseite des Lüfterrades (3) eine Kupplung (5) nach einem der vorhergehenden Ansprüche angeordnet ist.

8. Antriebssystem für die Kühlung eines Verbrennungsmotors eines Fahrzeugs, bei welchem zwischen einem Lüfterrad (3) und einer Antriebsseite des Lüfterrades (3) ein Getriebe (4) und eine Kupplung (5) nach einem der vorhergehenden Ansprüche vorgesehen ist, wobei die Kupplung unmittelbar an das Winkelgetriebe (4) antriebsseitig anstößt.

## Claims

1. Friction clutch (5) comprising a drive side and an output side, which can be used for driving a fan wheel (2), and a shiftable friction disc clutch (13), which in the engaged state connects the output side to the drive side, as well as a first eddy current clutch (15) for providing a slip speed on the output side, wherein the first eddy current clutch (15) has an eddy current zone formed on a cooling ring (11), **characterised in that** on the same cooling ring (11) on which an eddy current zone is formed for the first eddy current clutch (15), an eddy current zone is formed for a second eddy current clutch (18).

2. Clutch according to claim 1, **characterised in that** a second eddy current clutch (18) is provided which can be shifted.

3. Clutch according to one of the preceding claims, **characterised in that** the friction disk clutch (13) and/or the second eddy current clutch (18) can be electromagnetically engaged and disengaged.

4. Clutch according to the preamble of claim 1, in particular according to claim 1, **characterised in that** the cooling ring (11) forms the drive side of the clutch.

5. Clutch according to one of the preceding claims, **characterised in that** a rotor (14) of the friction clutch (5) which interacts with an armature disk (12), forms the output side.

6. Clutch according to one of the preceding claims, **characterised in that** two separate magnetic field conduction means are provided in the cooling ring (11).

7. Drive system (1, 22, 23) for cooling an internal combustion engine of a vehicle, in which between a fan wheel (3) and a drive side of the fan wheel (3) a clutch (5) according to one of the preceding claims is arranged.

8. Drive system for cooling an internal combustion engine of a vehicle, in which between a fan wheel (3) and a drive side of the fan wheel (3) a gear mechanism (4) and a clutch (5) according to one of the preceding claims is provided, wherein the clutch directly abuts against the angular gear mechanism (4) on the drive side.

## Revendications

1. Embrayage à friction (5) ayant un côté d'entraînement et un côté entraîné, embrayage utilisable pour entraîner un rotor de ventilateur (2) ainsi qu'un embrayage à friction (13) commutable, reliant le côté entraînant au côté entraîné lorsqu'il est commuté ainsi qu'un premier embrayage électromagnétique à courants de Foucault (15) fournissant une vitesse de rotation de traînée au côté entraîné,
* le premier embrayage électromagnétique à courants de Foucault (15) ayant une zone de courants de Foucault réalisée sur un anneau de refroidissement (11),
embrayage **caractérisé en ce que**
le même anneau de refroidissement (11) réalisant une zone de courants de Foucault pour le premier embrayage électromagnétique à courants de Foucault (15) comporte également une zone de courants de Foucault pour un second embrayage électromagnétique à courants de Foucault (18).

2. Embrayage à friction selon la revendication 1,
**caractérisé par**
un second embrayage électromagnétique à courants de Foucault (18) qui peut se commuter.

3. Embrayage à friction selon l'une des revendications précédentes,
**caractérisé en ce que**
l'embrayage à friction (13) et/ou le second embrayage électromagnétique à courants de Foucault (18) peuvent être activés ou neutralisés de manière électromagnétique.

4. Embrayage à friction selon le préambule de la revendication 1, notamment selon la revendication 1,
**caractérisé en ce que**
la bague de refroidissement (11) forme le côté entraînant de l'embrayage.

5. Embrayage à friction selon l'une des revendications précédentes,
**caractérisé par**
un rotor (14) de l'embrayage à friction (5) coopérant avec un disque d'induit (12) constituant le côté entraîné.

6. Embrayage à friction selon l'une des revendications précédentes,
**caractérisé en ce que**
deux moyens de guidage de champ magnétique, distincts sont prévus dans l'anneau de refroidissement (11).

7. Système d'entraînement (1, 22, 23) pour le refroidissement d'un moteur à combustion interne d'un véhicule selon lequel,
entre un rotor de ventilateur (3) et un côté d'entraînement du rotor de ventilateur (3), il est prévu un embrayage (5) selon l'une quelconque des revendications précédentes.

8. Système d'entraînement pour le refroidissement d'un moteur à combustion interne d'un véhicule selon lequel,
entre un rotor de ventilateur (3) et un côté entraînant du rotor de ventilateur (3), il est prévu une transmission (4) et un embrayage (5) selon l'une des revendications précédentes, l'embrayage attaquant directement le côté entraînant de la transmission à renvoi d'angle (4).
